Europäisches Patentamt

European Patent Office

Office européen des brevets

(19)

(11) Publication number : **0 642 104 A1**

(12) **EUROPEAN PATENT APPLICATION**

(21) Application number : **94306141.6**

(22) Date of filing : **19.08.94**

(51) Int. Cl.⁶ : **G06T 15/50**

(30) Priority : **03.09.93 JP 219474/93**

(43) Date of publication of application :
**08.03.95 Bulletin 95/10**

(84) Designated Contracting States :
**DE FR GB**

(71) Applicant : **International Business Machines
Corporation
Old Orchard Road
Armonk, N.Y. 10504 (US)**

(72) Inventor : **Miyazawa, Tatsuo
6-32-7, Nagao, Tama-ku
Kawasaki-shi, Kanagawa-ken, 214 (JP)**

(74) Representative : **Burt, Roger James, Dr.
IBM United Kingdom Limited
Intellectual Property Department
Hursley Park
Winchester Hampshire SO21 2JN (GB)**

(54) **Interactive volume rendering method and system.**

(57)    In order to reduce the amount of re-calculations needed when mapping functions to a color/opacity volume are changed, the processing of a volume rendering method is separated into two portions, the first depending on the volume data (i.e., a portion determined by the volume data) and the second depending on the mapping to the color and opacity. Pre-processing calculations will then be limited to the portion depending on the volume data, so as to thereby allow mapping functions to the color and opacity to be changed interactively. To this end, a "VIS volume" that consists of a data value, a shaded intensity, and a surface strength, and is expressed by 3 bytes per one voxel, is calculated and ray-traced. The color and opacity at each sampling point are determined when the VIS volume is sampled. Therefore, even if the mapping functions to the color and opacity are changed, it is not necessary to calculate the VIS module again.

FIG.3

EP 0 642 104 A1

Field of the invention

The present invention relates to a method and system for interactive volume rendering.

Prior art

In recent years, volume rendering methods have come to be used for image processing of CT scans, visualization of the computed results of fluid analysis, visualization of measurement data of resource exploration, etc. The method by Levoy is known as the typical volume rendering method (M. Levoy, "Display of Surfaces from Volume Data," IEEE CG & A, Vol. 8, No. 3, pp. 29-37, 1988).

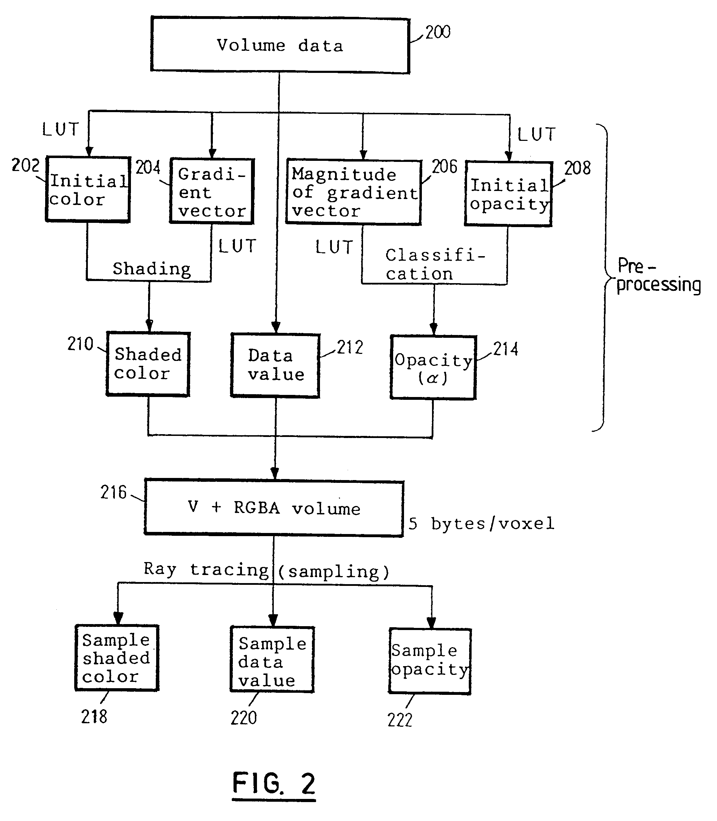

In the following, Levoy's method will be described with reference to Figure 2 for a case in which volume data is assumed to be three-dimensional array data and a ray tracing method is employed as the volume data projection method.

A volume value (block 212) at a lattice point (voxel) $(i,j,k)$ of volume data 200 is written as

$$\text{data}(i,j,k). \quad (1)$$

A shaded color $C(i,j,k)$ (block 210) and an opacity $\alpha(i,j,k)$ (block 214) at the lattice point $(i,j,k)$ of a color/opacity volume are calculated according to the following procedure.

$$\text{Initial color 202: } C_0(i,j,k) = \{R_0(i,j,k), G_0(i,j,k), B_0(i,j,k) \quad (2)$$
$$R_0(i,j,k) = \text{ColorLUT}(\text{data}(i,j,k), 0)$$
$$G_0(i,j,k) = \text{ColorLUT}(\text{data}(i,j,k), 1)$$
$$B_0(i,j,k) = \text{ColorLUT}(\text{data}(i,j,k), 2)$$

In the above equations, "LUT" means table look-up operation.

$$\text{Initial opacity 208: } \alpha_0(i,j,k) \quad (3)$$
$$\alpha_0(i,j,k) = \text{OpacityLUT}(\text{data}(i,j,k))$$
$$\text{Gradient vector 204: } Gv(i,j,k) \quad (4)$$
$$Gv(i,j,k) = \{Gvx(i,j,k), Gvy(i,j,k), Gvz(i,j,k)\}$$
$$Gvx(i,j,k) = \text{data}(i+1,j,k) - \text{data}(i-1,j,k)$$
$$Gvy(i,j,k) = \text{data}(i,j+1,k) - \text{data}(i,j-1,k)$$
$$Gvz(i,j,k) = \text{data}(i,j,k+1) - \text{data}(i,j,k-1)$$
$$\text{Magnitude 206 of gradient vector: } Gm(i,j,k) \quad (5)$$
$$Gm(i,j,k) = |Gv(i,j,k)|$$
$$\text{Shaded intensity } I(i,j,k) \quad (6)$$
$$I(i,j,k) = \text{ShadingLUT}(Gv(i,j,k))$$

The shading intensity $I(i,j,k)$ is omitted in Figure 2, but is used in calculating the shaded color 210 as described below.

$$\text{Surface strength } S(i,j,k) \quad (7)$$
$$S(i,j,k) = \text{StrengthLUT}(Gm(i,j,k))$$

The surface strength $S(i,j,k)$ is also omitted in Figure 2, but is used in calculating the opacity 214. Using the above parameters, the following calculations are performed.

$$\text{Shaded color 210: } C(i,j,k) = \{R(i,j,k), G(i,j,k), B(i,j,k)\} \quad (8)$$
$$C(i,j,k) = C_0(i,j,k) * I(i,j,k)$$
$$R(i,j,k) = R_0(i,j,k) * I(i,j,k)$$
$$G(i,j,k) = G_0(i,j,k) * I(i,j,k)$$
$$B(i,j,k) = B_0(i,j,k) * I(i,j,k)$$
$$\text{Opacity 214: } \alpha(i,j,k) \quad (9)$$
$$\alpha(i,j,k) = \alpha_0(i,j,k) * S(i,j,k)$$

The color/opacity volume consists of the shaded color (three components of R, G and B) and the opacity. More specifically, for the lattice point $(i,j,k)$, the volume has the four components of

$$R(i,j,k), G(i,j,k), B(i,j,k) \text{ and } \alpha(i,j,k). \quad (10)$$

In addition to the above components, the original volume data 212 needs to be used. Therefore, if each of the five components is expressed by 1 byte (a range of 256 levels, 0-255), 5 bytes are required for one lattice point (voxel) in Levoy's method.

In Levoy's method, the color/opacity volume is ray-traced to calculate a sample color 218, a sample data value 220, and a sample opacity 222, thereby generating an image. However, if the color and opacity of the image is changed interactively, the mapping functions of the color and opacity are changed. Those mapping functions correspond to above-described

$$\text{ColorLUT() and OpacityLuT()}. \quad (11)$$

Therefore, the color/opacity volume needs to be calculated again every time the mapping functions of the color and opacity are changed. Furthermore, since there exists the calculation processing stage using the mapping functions of the color and opacity before the ray tracing (sampling), not only the sampling calculation but also the color/opacity volume calculation itself needs to be performed again if the mapping function of the color/opacity volume is changed. Therefore, for example, even in the case of high-opacity data, that is, even where data of only voxels close to a viewpoint contribute to a generated image, all the voxels need to be subjected to re-calculations. That is, extra calculation time is consumed to perform wasteful calculations.

Other than Levoy's method, there exists a prior art technique disclosed in GB-A-2 231759. This technique relates to a method and system for displaying a volume object on a computer graphics display device, and consists of the steps of storing in a memory volume data that is represented in a volume space and generating a mapping function for mapping each unit of volume data to coordinates of a geometrical graphics element.

However, the above publication has no disclosure as to re-mapping of the volume data.

## SUMMARY OF THE INVENTION

An object of the present invention is to reduce the amount of recalculation needed when mapping functions to a color/opacity volume are changed in a volume rendering method.

Another object of the invention is to avoid an artifact (moire pattern) that would occur in a generated image in association with interpolation of the color and opacity.

The basic concept of the present invention resides in that processing of a volume rendering method is separated into a portion which depends on volume data (i.e., a portion determined by the volume data) and a portion which depends on mapping to the color and opacity and only the portion depending on the volume data is calculated as pre-processing, thereby allowing mapping functions to the color and opacity to be changed interactively. To this end, a "VIS volume" that consists of a data value, a shaded intensity, and a surface strength and is expressed by 3 bytes per voxel is calculated and ray-traced. The color and opacity at each sampling point are determined when the VIS volume is sampled. Therefore, even if the mapping functions to the color and opacity are changed, it is not necessary to calculate the VIS volume again. Since interpolation is performed for each sampling point using the original data values, no artifact (moire pattern) occurs in a generated image in association with the interpolation of the color and opacity.

According to the invention, since no re-calculations are required in the pre-processing portion when the mapping functions to the color and opacity are changed, the re-calculation time in association with a change of the mapping functions to the color and opacity is reduced to 10-80%. Furthermore, the calculation time of the pre-processing portion is reduced to about 80%, the image generating time is kept the same or reduced to some extent, and the necessary memory space is reduced to about 60%.

As described above, according to the invention, since the VIS volume need not be re-calculated even though the mapping functions to the color and opacity are changed, the image re-calculation and re-display can be performed quickly in response to the change of the color and opacity.

While conventionally 5 bytes are needed for one voxel, only 3 bytes are needed in the invention. This will contributes to reduction of the necessary memory space.

Furthermore, since interpolation for each sampling point is performed using original data values, artifact (moire pattern) occurrence in a generated image in association with the interpolation of the color and opacity can be improved.

By combining the invention and a successive refinement type image generation method, it becomes possible to change a generated image quickly and interactively in response to a change of mapping functions to the color and opacity in generating a three-dimensional image according to a volume rendering method, even on a general-purpose work station, i.e., without using special hardware.

### Brief Description of the Drawings:

Figure 1 is a block diagram showing constitution of a system to practise the present invention;
Figure 2 is a block diagram showing ray trace processing in a conventional technique; and
Figure 3 is a block diagram showing ray trace processing in the invention

### Detailed Description of the Invention

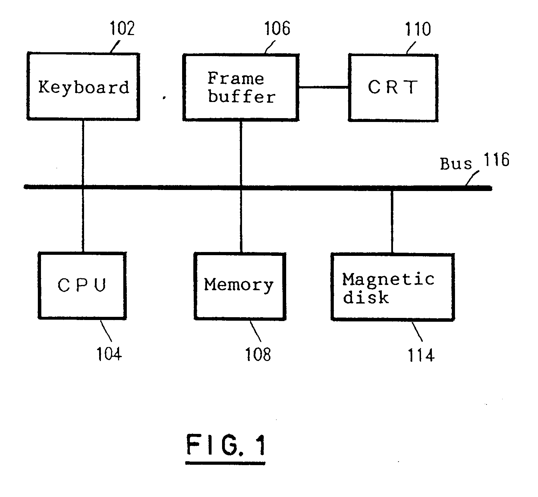

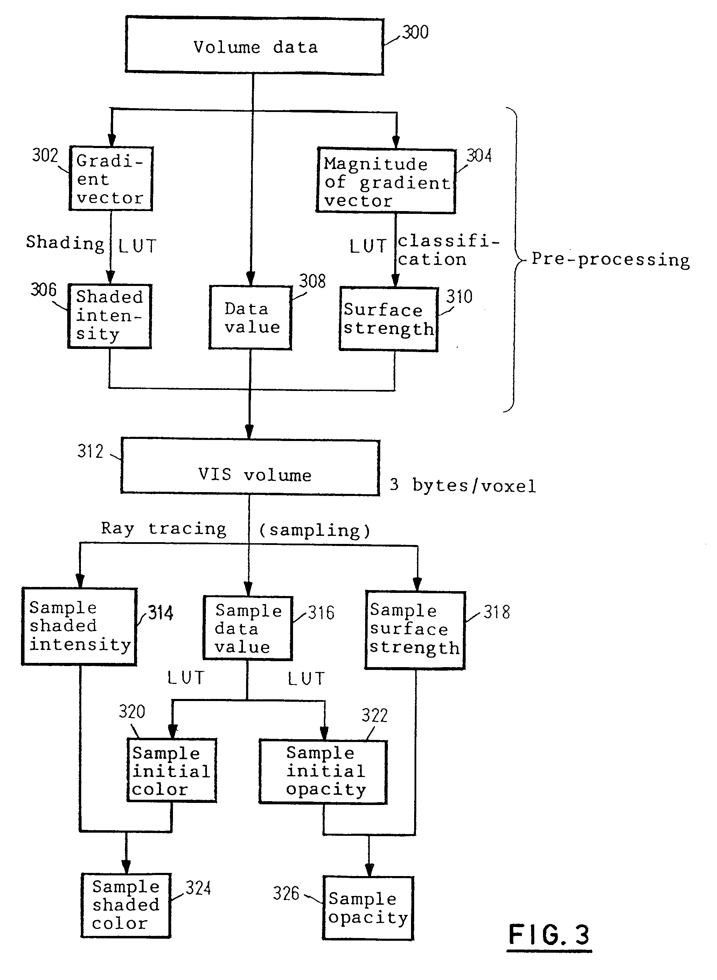

Figure 1 is a block diagram showing the hardware configuration presumed in the execution of the present invention. The system of Figure 1 has an ordinary configuration including a keyboard 102 used for inputting data to effect interactive operation; a CPU 104 for performing calculations; a memory 108 for loading a system for data processing, temporarily storing calculation results of the CPU 104, and providing a cache for the CPU 104; a CRT 110; a frame buffer 106 for dynamically holding, in a rewritable manner, data to be displayed on the CRT 110; a magnetic disk 114 for permanently storing a system program, application programs and processing data; and a bus 116 for connecting the above devices to enable data exchange therebetween. Although not shown in Figure 1, a pointing device such as a mouse is usually connected to the above system for the purpose of interactive operation, in addition to the keyboard 102. Processing modules and volume data shown in Figure 3 are normally stored in the magnetic disk 114, and loaded by the CPU 104 into the memory 108 via the bus 116 at the start of processing. In response to an interactive operation by an operator through the keyboard 102 (or the mouse (not shown)), the CPU 104 performs calculations on the data of the memory 108 and forwards the calculation results to the frame buffer 106, thereby enabling a desired graphics display.

With reference to Figure 3, a volume rendering technique of the invention will be described below. In Figure 3, a data value 308 of a lattice point (voxel) $(i,j,k)$ of volume data 300 or of the voxel closest to the lattice point $(i,j,k)$ is written as

$$\text{data}(i,j,k). \quad (12)$$

Various parameter values at the lattice point $(i,j,k)$ of a VIS volume are calculated as follows.

$$\text{Gradient vector 302: } Gv(i,j,k) \quad (13)$$
$$Gv(i,j,k) = \{Gvx(i,j,k), Gvy(i,j,k), Gvz(i,j,k)\}$$
$$Gvx(i,j,k) = \text{data}(i+1,j,k) - \text{data}(i-1,j,k)$$
$$Gvy(i,j,k) = \text{data}(i,j+1,k) - \text{data}(i,j-1,k)$$
$$Gvz(i,j,k) = \text{data}(i,j,k+1) - \text{data}(i,j,k-1)$$
$$\text{Magnitude 304 of gradient vector: } Gm(i,j,k) \quad (14)$$
$$Gm(i,j,k) = |Gv(i,j,k)|$$

Using the above values, the following calculations are made.

$$\text{Shaded intensity 306: } I(i,j,k) \quad (15)$$
$$I(i,j,k) = \text{ShadingLUT}(Gv(i,j,k))$$
$$\text{Surface strength 310: } S(i,j,k) \quad (16)$$
$$S(i,j,k) = \text{StrengthLUT}(Gm(i,j,k))$$

In the invention, the VIS volume 312 consists of the data value, shaded intensity, and surface strength, and the lattice point $(i,j,k)$ has the three components of

$$\text{data}(i,j,k), I(i,j,k) \text{ and } S(i,j,k). \quad (17)$$

If each competent is expressed by 1 byte (a range of 256 levels, 0-255), 3 bytes are required for one lattice point (voxel) in this method.

According to the invention, an image is generated by ray-tracing the VIS volume.

It is assumed that a data value 316, a shaded intensity 314, and a surface strength 318 at the nth sampling along a ray are expressed as

$$\text{data}(n), I(n) \text{ and } S(n). \quad (18)$$

A shaded color $C(n)$ and an opacity $\alpha(n)$ are calculated in the following manner.

$$\text{Initial color 320: } C_0 = \{R_0(n), G_0(n), B_0(n)\} \quad (19)$$
$$R_0(n) = \text{ColorLUT}(\text{data}(n), 0)$$
$$G_0(n) = \text{ColorLUT}(\text{data}(n), 1)$$
$$B_0(n) = \text{ColorLUT}(\text{data}(n), 2)$$
$$\text{Initial opacity 322: } \alpha_0(n) \quad (20)$$
$$\alpha_0 = \text{OpacityLUT}(\text{data}(n))$$

Therefore, the following calculations are made.

$$\text{Shaded color 324: } C(n) = \{R(n), G(n), B(n)\} \quad (21)$$
$$C(n) = C_0(n) * I(n)$$
$$R(n) = R_0(n) * I(n)$$
$$G(n) = G_0(n) * I(n)$$
$$B(n) = B_0(n) * I(n)$$
$$\text{Opacity 326: } \alpha(n) \quad (22)$$
$$\alpha(n) = \alpha_0(n) * S(n)$$

Mapping functions of the color and opacity correspond to

$$\text{ColorLUT() and OpacityLuT().} \quad (23)$$

However, even if the mapping functions of the color and opacity are changed, they do not influence the VIS volume and, therefore, the VIS volume need not be calculated again. In other words, in the invention, since the mapping functions of ColorLUT() and OpacityLuT() are carried out in the ray tracing (sampling) stage, no re-calculations are required for the VIS volume even if the mapping functions of the color and opacity are changed. By contrast, in the conventional constitution of Figure 2, since the mapping functions of ColorLUT() and OpacityLUT() are carried out in the stage before the ray tracing stage, re-calculations for the color/opacity volume should be performed every time the mapping functions of the color and opacity are changed. In the light of the facts that a considerable amount of calculation is usually required to re-calculate the color/opacity volume and that in interactive operation the color and opacity of an image are changed relatively frequently, it is understood that the invention provides a great advantage in terms of saving the amount of calculation compared to the conventional technique of Figure 2.

Comparative experiments were performed for the following cases, in which the method according to this invention and Levoy's method were incorporated into an interactive volume rendering tool employing an image generation method based on a successive refinement technique developed by the present inventors.

Case 1: display of an epidermis based on X-CT data of $256 \times 256 \times 133$
Case 2: display of a skull based on X-CT data of $256 \times 256 \times 133$
Case 3: display of a translucent epidermis and a skull based on X-CT data of $256 \times 256 \times 133$
Case 4: display of a brain based on MRI data of $252 \times 252 \times 139$
Case 5: display of a color mapping image of PET data of $128 \times 128 \times 61$

|  |  | Method of invention | Levoy's method | Ratio |
|---|---|---|---|---|
| Case 1 | Pre-processing time (s) | 123.68 | 148.74 | 0.83:1 |
|  | Image generation time (s) | 18.70 | 17.85 | 1.05:1 |
|  | Total calculation time (s) | 142.38 | 166.59 | 0.85:1 |
|  | Re-calculation time (s) | 18.70 | 166.59 | 0.11:1 ← |
|  | Total number of sampling | 256,056 | 241,718 | 1.06:1 |

| | | | | |
|---|---|---|---|---|
| Case 2 | Pre-processing time (s) | 31.81 | 42.04 | 0.76:1 |
| | Image generation time (s) | 28.49 | 26.70 | 1.07:1 |
| | Total calculation time (s) | 60.30 | 68.74 | 0.88:1 |
| | Re-calculation time (s) | 28.49 | 68.74 | 0.41:1 ← |
| | Total number of sampling | 288,743 | 266,793 | 1.08:1 |
| Case 3 | Pre-processing time (s) | 151.99 | 180.22 | 0.84:1 |
| | Image generation time (s) | 35.38 | 50.11 | 0.71:1 |
| | Total calculation time (s) | 187.37 | 230.33 | 0.81:1 |
| | Re-calculation time (s) | 35.38 | 230.33 | 0.15:1 ← |
| | Total number of sampling | 804,677 | 1,396,892 | 0.58:1 |
| Case 4 | Pre-processing time (s) | 54.93 | 66.49 | 0.83:1 |
| | Image generation time (s) | 21.74 | 20.56 | 1.06:1 |
| | Total calculation time (s) | 76.67 | 87.05 | 0.88:1 |
| | Re-calculation time (s) | 21.74 | 87.05 | 0.25:1 ← |
| | Total number of sampling | 307,907 | 307,258 | 1.00:1 |
| Case 5 | Pre-processing time (s) | 3.36 | 4.25 | 0.79:1 |
| | Image generation time (s) | 25.82 | 27.14 | 0.95:1 |
| | Total calculation time (s) | 29.18 | 31.39 | 0.93:1 |
| | Re-calculation time (s) | 25.82 | 31.39 | 0.82:1 ← |
| | Total number of sampling | 513,370 | 499,714 | 1.03:1 |

In the above tables, the "pre-processing time" and the "image generation time" respectively correspond to the times required for the VIS volume calculation and the ray tracing of the VIS volume in the method of the invention, and respectively correspond to the times required for the calculation of the color/opacity volume and the ray tracing of the color/opacity volume in Levoy's method. The "total calculation time" is the time required for the first generation of a three-dimensional image, and the "re-calculation time" is the time required for the generation of a three-dimensional image from the second time onward, where the mapping functions to the color and opacity are changed. According to the method of the invention, the re-calculation time includes only the image generation time, because re-calculations need not be performed in the pre-processing portion even when the mapping functions to the color and opacity are changed.

In the above tables, the respective times are CPU times (sec).

## Claims

1. A computerized volume rendering method, comprising the steps of:

(a) providing volume data;

(b) constructing a voxel at each lattice point of the volume data by a data value, an intensity, and a surface strength;

(c) determining, for each ray, a data value, an intensity, and a surface strength at each sampling point along the ray, and calculating a sample color and a sample opacity based on the data value, intensity, and surface strength thus determined; and

(d) determining, for each ray, the pixel value of an image to be generated by accumulating the sample color values and the sample opacities calculated in step (c) along the ray.

2. A computerized volume rendering method, comprising the steps of:

(a) providing volume data;

(b) constructing a voxel at each lattice point of the volume data by a data value, an intensity, and a surface strength;

(c) determining, for each ray, the data value, the intensity, and the surface strength of the voxel closest to each sampling point along the ray, and calculating the sample color and sample opacity of the voxel closest to the sampling point based on the data value, intensity, and surface strength thus determined; and

(d) determining, for each ray, the pixel value of an image to be generated by accumulating the sample color values and the sample opacities calculated in step (c) along the ray.

3. A volume rendering method according to claim 1 or 2, wherein the data value, intensity, and surface strength of the voxel each consist of 1 byte, which means one voxel consists of 3 bytes.

4. A computerized volume rendering method, comprising the steps of:

(a) providing volume data;

(b) constructing a voxel at each lattice point of the volume data by a data value, an intensity, and a surface strength;

(c) determining an opacity mapping function and a color mapping function in response to designation of an opacity and a color from an operator;

(d) determining, for each ray, a data value, an intensity, and a surface strength at each sampling point along the ray, and calculating a sample color and a sample opacity from the data value, intensity, and surface strength using the mapping functions determined in step (c); and

(e) determining, for each ray, a pixel value of an image to be generated by accumulating the sample color values and the sample opacities calculated in step (d) along the ray.

5. A volume rendering method according to claim 4, wherein the data value, intensity, and surface strength of the voxel each consist of 1 byte, which means one voxel consists of 3 bytes.

6. A volume rendering method according to claim 4, wherein each of the mapping functions is defined by a look-up table.

7. A volume rendering system comprising:

(a) a means for storing volume data;

(b) a means for sampling the volume data, constructing a voxel at each of the sampling points by a data value, an intensity, and a surface strength, and storing the voxel thus constructed;

(c) a means for determining an opacity mapping function and a color mapping function in response to designation of an opacity and a color from an operator;

(d) a means for determining, for each ray, a data value, an intensity, and a surface strength at each sampling point along the ray, and calculating a sample color and a sample opacity from the data value, intensity, and surface strength using the mapping functions determined by means (c); and

(e) means for determining, for each ray, the pixel value of an image to be generated by accumulating the sample color values and the sample opacities calculated by means (d) along the ray.

8. A volume rendering system according to claim 7, wherein the data value, intensity, and surface strength of the voxel each consist of 1 byte, which means one voxel consists of 3 bytes.

9. A volume rendering system according to claim 7, wherein each of the mapping functions is defined by a look-up table.

FIG. 1

FIG. 2

FIG. 3

**European Patent Office**

## EUROPEAN SEARCH REPORT

Application Number

EP 94 30 6141

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | INFORMATIONSTECHNIK IT, vol.33, no.2, 1992, MUNCHEN BR pages 64 - 71, XP225573 FRUHAUF 'RAYCASTING-VERFAHREN ZUR VIZUALIESIERUNG VON VOLUMENDATEN' * the whole document * | 1-9 | G06T15/50 |

TECHNICAL FIELDS SEARCHED (Int.Cl.6)

G06T

The present search report has been drawn up for all claims

| Place of search | Date of completion of the search | Examiner |
|---|---|---|
| THE HAGUE | 25 November 1994 | Burgaud, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)